# EUROPEAN PATENT SPECIFICATION

(11) **EP 1 156 225 B1**
(45) Date of publication and mention of the grant of the patent: **30.03.2005**
(21) Application number: 01111635.7
(22) Date of filing: 14.05.2001
(51) Int. Cl.: F16B 12/02, F16B 12/54, F16B 12/60

(54) **Fast connection between two tubular beams meeting at an angle**
Schnellverbindung zwischen zwei winklig aufeinander treffenden Rohrprofilen
Attache rapide entre deux profilés tubulaires se raccordant sous un angle

(30) Priority: 17.05.2000 IT PD000131
(43) Date of publication of application: 21.11.2001
(73) Proprietor: Vassilli s.r.l., 35020 Saonara (Padova) (IT)
(72) Inventor: Vassilli, Berto, 35020 Saonara, PD (IT)

(56) References cited:
- EP-A- 0 548 541
- US-A- 5 358 309
- US-A- 5 517 928

## Description

At present in the metal constructions with tubular section bars are used the most diversified tecniques to joint them.

Special is the case of the linking of two tubular section bars which join one to the other on angle.

A common case is that of the application of the head and foot panels to the frame of the beds equipped with legs used on the hospitals.

The sleepers of the frames or their extensions end with right-angles weldings to the ends of pieces of section bars generally tubular.

The joint of the lower ends of the head and foot panels uprights with these pieces occurs by coupling type male and female. The ends of the head and foot panels uprights eventually suitably tapered are introduced in these tubular pieces welded to the sleepers of the bed frame; or are these pieces which are introduced in the ends of the tubular uprights of the head and foot panels.

The reciprocal lockage against the uncoupling is made by pins or screws or other systems which allow, in case of need, a quick disconnection.

To reduce the costs concerning the working for preparation and application by welding of the pieces to the ends of the sleepers of the bed frames the resolving innovation of this patent is used.

The innovation consist in a quick connection between two tubular section bars which join one to the other on angle in order to make the joint, one of the two fits into the other by a suitable squared hole executed on the wall of this latter one.

This connection is realized because the section bar which fits with the end into the other is equipped with a contoured cut on a side of shape, wideness and depth in which could be inserted an edge of the sides of the squared hole being a part of the other section bar with which it must join.

It will no more be prepared nor welded the pieces to the ends of the sleepers of the bed frames.

It will be operated directly by incisions, holes or squared holes in the ends both of the uprights of the foot panels (or head panels) and on the ends of the sleepers of the bed frame without any welding.

This type of coupling allows also to make a quick connection between two tubular section bars which join one to the other on angle even in case it is not referred to head or foot panels joining with the sleepers of the bed frames.

To make the coupling following this patent one of the two tubular section bars to be joined will have a transversal section in millimiters which is higher at least by one transversal dimensions in millimiters of the other.

Considering the specific case of the application of the head and foot panels to the bed frames, it is described a concrete case of execution.

On the end of the tubular section bar of each sleeper it is made a contoured cut, which covers the whole upper side of few millimiters of depth and of width corresponding to the thickness of the wall of the tubular section bar to be coupled.

The distance of this contoured cut from the end must not exceed the extent to which this shape is able to come into the other.

On the opposite side of that one of the contoured cut and at a distance from the end of about the half of that which is the distance from the contoured cut compared to this end, it is made a hole in which it will thread the conical end of the head of a screw.

Near the end of the tubular section bar of each upright of head and/or foot panel, is made a squared hole of width and height corresponding to the width and height owned by the edge of the sleeper which will be put in.

In a position under the lower side of the squared hole on the two parts sidely are made two squared holes within which is a plate flat cross bar with central threaded hole in which it will be screwed a screw having conical end.

By making this contoured cut on the upper side and hole on the lower side of the end of the sleeper of the frame; of opening of a squared hole on the frontal side on the ends of the uprights of the foot and head panels and of opening of two squared holes on the sides near the above said uprights under the lower side of the squared hole, the joint and the fixing occurs in the way described hereinafter.

It must be placed the head or foot panel frontally to the ends of the sleepers of the bed and they must be inserted in the squared holes.

Once placed the upper edges of the squared holes of the uprights of the head (or foot) panel at the same level of the contoured cuts placed on the ends of the sleepers these edges must be inserted.

The flat cross bars with threaded hole in the center must be sticked in the squared holes and the screws are screwed until their ends push on the holes placed on the lower sides of the sleepers.

So is made the coupling.

For the uncoupling are followed the reverse operations to those made for the coupling.

Once loosened the screws and raised the edges of the squared holes over the contoured holes in which are inserted these edges, the disangagement occurs by a simple shifting off transfer of the head (or foot) panel from the frame.

What described above results clarified by examining the enclosed Tables of drawings.

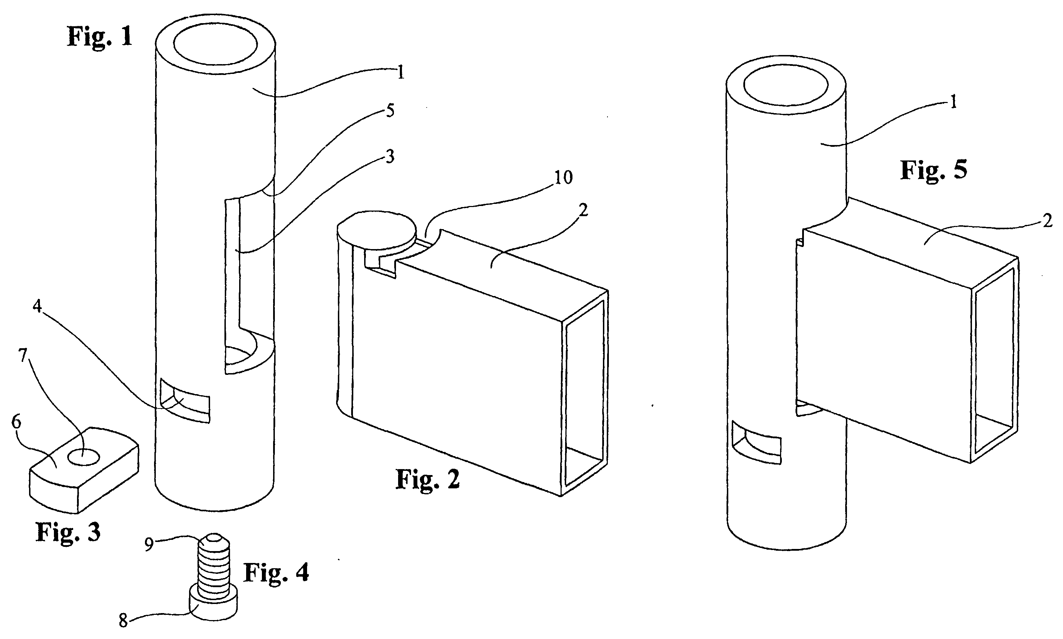

The fig. 1 shows the tubular section bar equipped with frontal squared hole for the fitting in of the tubular section bar with which it must join and of two squared holes made orthogonally to the frontal squared hole and placed under the lower end of the frontal squared hole.

The fig. 2 shows the tubular section bar equipped with a contoured cut on the upper side within which there must fix the upper end of the squared hole placed on the tubular section bar with which it must couple.

The fig. 3 shows the flat cross bar with central threaded hole which must be fitted in the two side squared holes placed in the section bar with frontal squared hole.

The fig. 4 shows the screw having the conical end which, screwed on the flat cross bar, must by a hole placed on the lower side of the tubular section bar with contoured cut, push this section bar in such a way that the contoured cut is forcedly affected by the upper end of the frontal squared hole of the section bar with which it is in coupling.

The fig. 5 shows the two tubular section bars angled one to the other in coupling. It can be noticed that the flat cross bar with central hole for the pushing screw is not inserted.

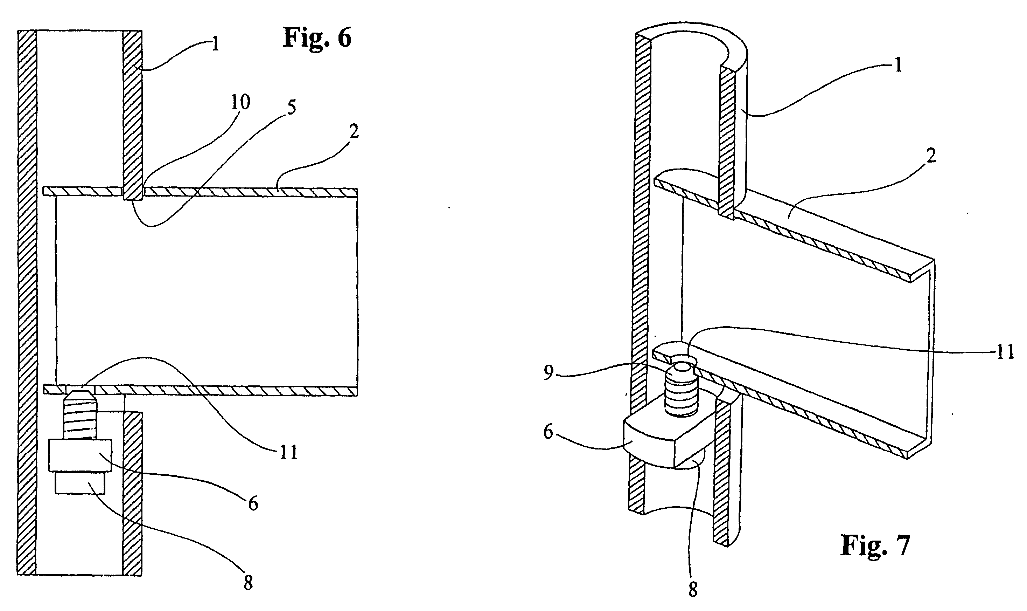

The fig. 6 shows a median longitudinal section of the two tubular section bars coupled where it appears that the upper edge of the squared hole of a section bar is inserted in the contoured cut placed on the other section bar. It is noted also that the screw fixed in the plate is engaged in the hole of the lower side of the section bar with contoured cut.

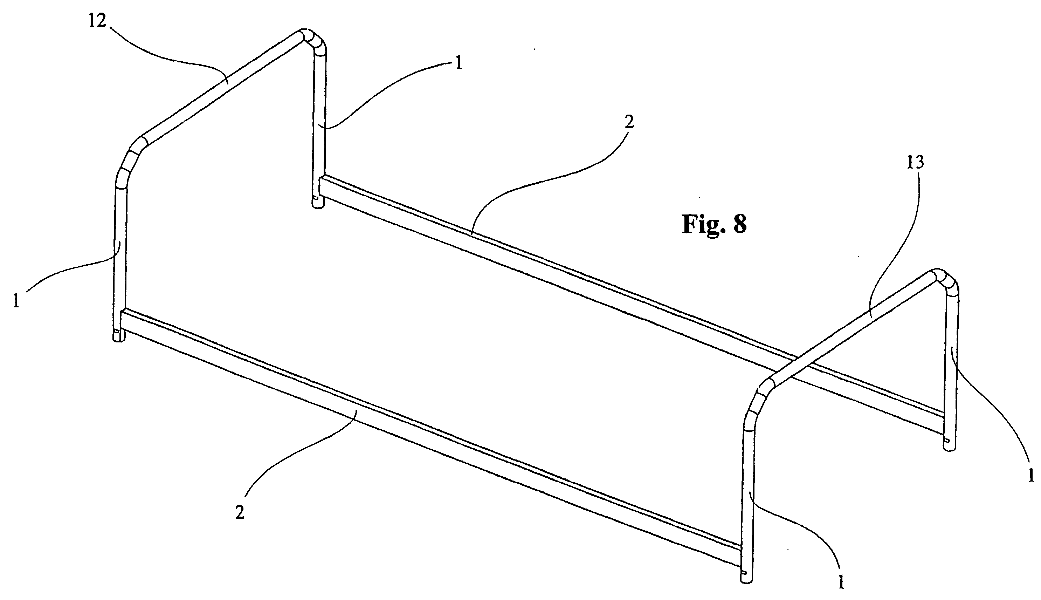

The fig. 7 shows axonometrically the median longitudinal section referring to fig. 6.

The fig. 8 shows schematically a head and foot panel coupled with two sleepers which can be identified with those of a bed frame.

It has been indicated with 1 the tubular section bar equipped with the squared hole 3 and of the two side squared holes 4; with 5 the upper edge of the squared hole 3; with 6 the flat cross bar with threaded hole 7; with 8 the screw to be screwed in the flat cross bar 6 whose end 9 is conical; with 10 the contoured cut placed on the section bar 2 for the fitting of the upper edge 5 of the squared hole 3; with 11 the hole placed in the lower side of the section bar 2 within which is engaged the conical end 9 of the pushing screw 8; with 12 a symbolic head panel and with 13 a symbolic foot panel made of tubular section bar coupled with two symbolic sleepers 1 made of tubular section bar of a symbolic bed frame.

## Claims

1. Quick connection between two tubular section bars (1,2) which join one to the other on angle in order to make the joint one of the two (2) fits into the other (1) by a suitable squared hole (3) executed on the wall of this latter one, **characterised in that** the section bar (2) which fits with the end into the other (1) is equipped with a contoured cut (10) on a side of shape, wideness and depth in which could be inserted an edge (5) of the sides of the squared hole (3) being a part of the other section bar (1) with which it must join.

2. Quick connection between two tubular section bars (1,2) which join one to the other on angle according to claim 1 **characterised in that** the section bar (2) which fits in, is equipped in the lower side which must be inserted of a hole (11) which can be also be threaded.

3. Quick connection between two tubular section bars (1,2) which join one to the other on angle according to claim 1 or 2 **characterised in that** the tubular section bar (1) equipped with square hole (3) for the insertion of the other (2) is equipped on two opposite sides, generally those not affected by the squared hole (3) and in a position suitably under the lower edge of the squared hole (3) of two squared holes (4) for the insertion of a flat cross bar (6) with central hole (7) which can be threaded.

4. Quick connection between two tubular section bars (1,2) which join one to the other on angle according to one or more of the previous claims **characterised in that** for giving stability to the coupling join between the two section bars (1,2) it is determined by a screw (8) with conical end (9) the push between the flat cross bar (6) inserted in the section bar (1) with squared hole (3) and the lower side of the section bar (2) inserted where the end (9) of the conical screw (8) is engaged in the hole (11) of the above said lower side in order to assure the forced insertion of the edge (5) of the squared hole (3) of the section bar (1) with squared hole (3) on the contoured cut (10) of the section bar (2) inserted by at the same time the screw (8) carrying out a second point of restrain between the two section bars (1,2).

## Patentansprüche

1. Raschverbindung zwischen zwei röhrenförmigen Profileisen (1,2), die miteinander winkelig verbunden sind; um die Kupplung zu erstellen, geht eines der beiden Profileisen (2) in das andere (1) hinein, durch ein, auf der Wand dieses letzten Profileisen vorgenommenes Quadratloch (3); **kenngezeichnet dadurch**, **dass** das Profileisen (2) das mit dem Ende in das andere (1) hineingeht, mit einem geformten Schlitz (10) auf einer Seite versehen ist, mit Form. Breite und Tiefe, die die Einsetzung eines Randes (5) der Seiten des Quadratlochs (3) gestatten, das dem anderen Profileisen (1) gehört, mit wem es sich verbinden soll.

2. Raschverbindung zwischen zwei röhrenförmigen Profileisen (1,2), die, gemäß Anspruch 1. miteinander winkelig verbunden sind, **kenngezeichnet dadurch**, **dass** das Profileisen (2), das in das andere geht, an dem unteren einzufügenden Teil, mit einem Loch (11) versehen ist, das auch gewindegeschnitten werden kann.

3. Raschverbindung zwischen zwei röhrenförmigen Profileisen (1,2) die, gemäß Anspruch 1 oder 2 miteinander winkelig verbunden sind, **kenngezeichnet dadurch**, **dass** das röhrenförmige Profileisen (1), mit Quadratloch zum Einsatz des anderen (2) auf zwei Gegenseiten - üblicherweise denjenigen, die ohne Quadratloch (3) sind- , und in einer zweckmäßigen Position unter dem unteren Rand des Quadratlochs (3), mit zwei Quadratlöchern (4) zum Einsatz eines flachen Stegs (6) mit Zentralloch (7), wo eine Gewinde geschnitten werden kann, versehen ist.

4. Raschverbindung zwischen zwei röhrenförmigen Profileisen (1,2), die, gemäß einem oder mehreren der o.g. Ansprüche, miteinander winkelig verbunden sind, **kenngezeichnet dadurch**, **dass,** um Festigkeit der Kupplungsverbindung der zwei Profileisen (1,2) zu geben, verursacht man durch eine Schraube (8) mit kegelförmigem Ende (9), den Druck zwischen dem Steg (6) im Profileisen (1) mit Quadratloch (3) eingesteckt, und die Unterseite des Profileisens (2), an der Stelle eingesteckt, wo das Ende (9) der Kegelförmigen Schraube (8) ins Loch (11) der o.g. Unterseite sich einklemmt; **dadurch** versichert man das Hineindrücken des Rands (5) des Quadratlochs (3) des Profileisens (1) mit Quadratloch (3) in den Schlitz (10) vom Profileisen (2), dabei erzeugt die Schraube (8) eine zweite Bindungsstelle zwischen den beiden Profileisen (1,2).

## Revendications

1. Connexion rapide entre deux tubes profilés (1, 2) qui se raccordent à angle, afin de faire la jonction, l'un des deux (2) s'enchâsse dans l'autre (1) à travers un trou carré (3) prévu sur la paroi de ce dernier, **caractérisé par le fait que** le profilé (2) qui s'enchâsse avec son bout dans l'autre (1) est muni d'une fente (10) sur un côté ayant forme, ampleur et profondeur permettant l'enchâssement d'un bord (5) des côtés du trou carré (3) appartenant à l'autre profilé (1) avec lequel il doit se joindre.

2. Connexion rapide entre deux tubes profilés (1, 2) qui se raccordent à angle suivant la revendication 1, **caractérisé par le fait que** le profilé (2) qui s'enchâsse, est équipé sur le côté inférieur qui doit être inséré d'un trou (11) pouvant être aussi fileté.

3. Connexion rapide entre deux tubes profilés (1, 2) qui se raccordent à angle suivant la revendication 1 ou 2, **caractérisé par le fait que** le tube profilé (1) muni d'un trou carré (3) pour l'enchâssement de l'autre (2) est muni sur deux côtés opposés, en général ceux non concernés par le trou carré (3) et en position convenablement au-dessous du bord inférieur du trou carré (3) de deux petits trous carrés (4) pour l'introduction d'une traverse (6) en plat avec trou central (7) pouvant être fileté.

4. Connexion rapide entre deux tubes profilés (1, 2) qui se raccordent à angle suivant une ou plusieurs des revendications ci-dessus, **caractérisé par le fait que** pour donner solidité à la jonction d'accouplement entre les deux profilés (1, 2), il s'établit par une vis (8) avec extrémité conique (9) la poussée entre la traverse (6) insérée dans le profilé (1) avec trou carré (3) et le côté inférieur du profilé (2) inséré où le bout (9) de la vis (8) conique s'engage dans le trou (11) du côté inférieur ci-dessus de façon à assurer l'enchâssement forcé du bord (5) du trou carré (3) du profilé (1) avec trou carré (3) dans la fente (10) du profilé (2) inséré, au même temps réalisant la vis (8) un deuxième point d'engagement entre les deux profilés (1, 2).
